# EUROPEAN PATENT APPLICATION

(11) **EP 3 281 905 A2**
(43) Date of publication of application: **14.02.2018**
(21) Application number: 17182149.9
(22) Date of filing: 19.07.2017
(51) Int. Cl.: B66B 5/22

(54) **OPERATING MEANS FOR AN ELEVATOR BRAKING DEVICE**

(30) Priority: 19.07.2016 DE 202016103895 U
(71) Applicant: Wittur Holding GmbH, 85259 Wiedenzhausen (DE)
(72) Inventor: HOLZER, René, 3270 Scheibbs (AT); KRIENER, Karl, 3322 Viehdorf (AT); RUSSWURM, Christoph, 3200 Ober-Grafendorf (AT)
(74) Representative: Misselhorn, Hein-Martin

(57) **Abstract**

A braking device (1) for braking and/or catching an elevator car, with a basic body (2), a braking means (5) which, by abutting against a brake rail (3), is driven into a gap between the basic body (2) and the brake rail (3) and thus produces the braking forces, a spring member (23) pressing the braking means (5) in the direction of the brake rail (3) and a retaining magnet (25) which keeps the braking means (5), in its stand-by position, at a distance from the brake rail against the tension of the spring member (23) and acts on a magnetic armature (26), wherein the magnetic armature (26) is part of a tappet (27) that can be translationally moved back and forth between two extreme positions, of which the one extreme position marks the fully released position of the braking means (5) and the other extreme position marks the fully driven-in position of the braking means (5), where the path of the magnetic armature (26) between the two extreme positions, including the extreme positions, lies within an armature housing (31) which is adjacent to the retaining magnet (25) at least on the side on which the retaining magnet (25) attracts the tappet (27).

## Description

The invention relates to a braking device according to the preamble of claim 1.

### TECHNICAL BACKGROUND

Braking devices of this type are known in a variety of forms. The electromechanical operation of such braking devices using a solenoid is also known.

### OBJECT OF THE INVENTION

In this context, it is an object of the invention to create a generic braking device which, on the whole, offers a particularly reliable operation.

### THE INVENTIVE SOLUTION

Within the context of the invention, a braking device for braking and/or catching an elevator cage is therefore proposed, which has a basic body and a braking means which, by abutting against the brake rail, is driven into a gap between the basic body and the brake rail and thus produces the braking forces. At the same time, a spring member is provided, which presses the braking means in the direction of the brake rail and ensures that the brake carries out its function even in the case of a power failure. In addition, a retaining magnet is provided, which keeps the braking means, in its stand-by position, at a distance from the brake rail against the tension of the spring member. It acts on a magnetic armature. The magnetic armature is part of a tappet that can be translationally moved back and forth between two extreme positions. One of these two extreme positions is assumed if the braking means is fully released, i.e. retained in its inactive position. The other one of these extreme positions is assumed if the braking means has been driven fully, i.e. as far as possible, into the area between the basic body and the brake rail.

According to the invention, it is provided that the path of the magnetic armature between the two extreme positions, including the extreme positions, lies within an armature housing. At least on the side on which the retaining magnet attracts the tappet, this armature housing is adjacent to the retaining magnet. In this manner, the retaining magnet and the armature housing completely enclose the space of movement of the tappet.

That way it is, in the sense of a preferred effect, (essentially or at least completely) avoided that a metallic particle or metallic dust can come so close to the retaining magnet that it will be attracted by the retaining magnet thereby exerting any obstructing effect when the retaining magnet is actuated in order to get control over an emergency situation or when the retaining magnet is actuated for test purposes.

Independent protection is sought for this invention as well as in connection with other aspects of the invention described by an independent claim or subclaims depending therefrom.

### FURTHER IMPROVEMENTS OF THIS INVENTION

It was found to be particularly beneficial if the armature housing is formed by a cup open on one side, which preferably consists of metal and whose open side is closed off by the retaining magnet. Ideally, the armature housing accommodates the retaining magnet at least partially, preferably completely, in any case along the circumference thereof. In this manner, the housing can be attached in the retaining magnet particularly securely.

Ideally, the armature housing is press-fitted onto the retaining magnet, or onto the circumferential shell surface thereof, which is oversized compared with the clear cross section of the armature housing, so that the result is a frictional connection. An additional positive-fit member for anchoring the armature housing provides for additional safety against an inadvertent separation of the armature housing from the retaining magnet.

It is particularly beneficial if the armature housing is a component completely separate from the rest of the braking device, which encloses exclusively the magnetic armature, a part of the tappet connected to the magnetic armature and the retaining magnet and encloses possible connection aids, such as snap rings and bolts.

It is particularly beneficial if the armature housing has a passageway on the side thereof facing away from the retaining magnet. The tappet may protrude towards the outside out of the armature housing through this passageway. In this manner, a free end outside the housing is provided which is capable of acting as required on the component to be operated by the magnetic armature.

Ideally, the retaining magnet forms a generally central guide in which a guiding appendage of the tappet is held in a movable manner. A particularly reliable movable mounting of the tappet is thus ensured.

In this case, it is particularly beneficial if the magnetic armature is retained on the tappet in such a way, with pivoting play, that the side thereof facing towards the retaining magnet is able to orient itself towards the retaining magnet. It is thus prevented that, in the state in which the magnetic armature is retained by the retaining magnet, a certain air gap is formed, in any case partially, between the magnetic armature and the surface of the retaining magnet facing toward it, due to a slanted position of the magnetic armature. Such an air gap would weaken the holding force or, given the same holding force, result in a higher power consumption of the electromagnet. Therefore, it is beneficial if the magnetic armature is able to orient itself perfectly towards the retaining magnet.

It is particularly useful if the armature housing forms on its inner face an additional sliding guide which interacts with the outer circumferential surface of the magnetic armature.

Another very advantageous embodiment is to provide at least one air bypass on the magnetic armature. This prevents the formation of an air cushion between the magnetic armature and the armature housing, which inhibits the former's movement, when the magnetic armature is operated quickly. Using such an air bypass, an almost unimpeded air equalization can be produced, even if the magnetic armature moves quickly, between the space that becomes smaller within the magnetic armature housing due to the movement of the magnetic armature and the further space that is enlarged due to the movement of the magnetic armature.

Another advantageous embodiment provides that the tappet acts on a pivot lever whose pivoting towards the guide rail causes the braking device to be activated. In this case, the tappet is preferably not rigid but can be brought into abutment against the pivot lever via a spring member. It is thus prevented that the magnetic armature can be unnecessarily influenced or even destroyed by movements imposed from the outside on the pivot lever when releasing the brake.

### TECHNICAL BACKGROUND FOR ANOTHER ASPECT OF THE INVENTION

Numerous proposals are known for holding an elevator brake in its standby-position by means of a holding magnet in the shape of a solenoid which attracts a magnetic armature against the tension of a brake actuation spring.

As soon as an emergency is detected or as soon as a blackout occurs the holding force of the holding magnet breaks down so that the brake is securely activated.

### ANOTHER OBJECT OF THE INVENTION

It is an object of the invention to reduce the power consumption of an elevator brake during regular operating conditions.

### THE INVENTIVE SOLUTION

In order to solve this problem an elevator braking device is proposed with a holding magnet holding a brake roller or, more general, a braking organ in a standby position in which it does not contact the brake rail against the closing force of a brake actuating spring element. According to the invention the holding magnet is a combination of a permanent magnet which produces the force for said holding by attracting a magnetic armature and of a solenoid with an excitation coil which produces, when being energized, an opposite directed magnetic field that weakens the magnetic field of the permanent magnet in a way that the closing force of the spring element overcomes the holding force of the permanent magnet, so that the brake is activated.

Independent protection is sought for this invention as well as in connection with other aspects of the invention described by an independent claim or subclaims depending therefrom.

### TECHNICAL BACKGROUND FOR ANOTHER ASPECT OF THE INVENTION

It is a trend to use braking devices of an elevator not only for controlling emergencies like overspeed. Instead, modern elevator brakes are used to arrest the elevator car in landig position for avoiding unintended car movement, for example.

This "dual use" makes it necessary to securely monitor whether the brake is really closed in times it has to be closed and/or to securely monitor whether the brake is fully released, indeed, when a new travel cycle begins.

### ANOTHER OBJECT OF THE INVENTION

Moreover, the invention is based on the problem of reliably detecting whether the braking device has been triggered, i.e. is braking or has caught. Accomplishing this task is all the more important if the braking device is one that can be reset automatically - for example by the cage being driven back in the opposite direction to the braking or catching direction, whereupon the braking device is returned to its standby state.

### THE INVENTIVE SOLUTION

In order to solve this problem, a braking device for braking and/or catching an elevator cage or elevator car is proposed, which has a basic body and a braking means. The braking means, by abutting against the brake rail, is driven into a gap between the basic body and the brake rail. Thus, braking forces are produced. In this case, the basic body is retained on the elevator car in a floating manner. The floating mounting is designed in such a way that the basic body carries out a transverse movement relative to the direction of travel of the car due to the braking member being driven in, i.e. a movement transverse, generally perpendicular, to the direction of travel. According to the invention, this transverse movement is used to operate a contact which signalizes the activation of the braking device and which preferably also signalizes when the braking device or its basic body has again left the position previously assumed during the braking or catching process. Such a detection is exceptionally reliable because the special design of the brake involves the basic body inevitably being displaced transversely to the direction of travel when the braking device is operated, i.e. during the braking or catching process. This displacement can be detected very easily and reliably.

Independent protection is sought for this invention as well as in connection with other aspects of the invention described by an independent claim or subclaims depending therefrom.

### FURTHER IMPROVEMENTS OF THIS INVENTION

It is particularly preferred if the contact is operated via a key that can be removed from the basic body. Ideally, the key can be fixed on the car in different positions, preferably by means of one or several elongated holes with which it is equipped. In this manner, a proper operation of the contact when the basic body is displaced transversely to the direction of travel can be easily set.

It is particularly beneficial if the key is a bent metal sheet part. It is inherently provided with a certain intrinsic elasticity, which goes easy on the contact. Thus, the key, if necessary, can be adjusted to a suitable shape by bending it on-site if its positional variability due to its elongated holes is insufficient.

Ideally, the contact is designed and positioned in such a way that it has a contact pin that is to be operated in the direction parallel or substantially parallel to the direction of travel.

It is particularly beneficial if the key acts on the contact via a ramp which includes an acute angle between 30° and 60°, better between 40° and 50°, with the direction of travel of the car. A particularly reliable operation of the contact is possible by means of a ramp extending at such an angle, even if the basic body, due to its floating mounting, should carry out movements not only transversely to the direction of travel, but possibly also smaller movements in and opposite to the direction of travel. Such a design prevents both the key from lifting off completely from the contact as well as the key from pressing the contact hard up to its stop.

### TECHNICAL BACKGROUND FOR ANOTHER ASPECT OF THE INVENTION

Known elevator brakes of the brake type under discussion here require rather high actuation forces if the brake needs to be released again after activation. For the full automatic brake release this requires not seldom elevator drives with more power than necessary for the regular elevator opration. This is not economical under the aspect of power consumtion and manufacturing costs.

Therefore a need exists to improve the release (deactivation) of the brake, and in particular to reduce the operation forces necessary in order for releasing the brake again. In some cases it is necessary, too, to reduce the possible wear that may occur during the release of the brake.

### ANOTHER OBJECT OF THE INVENTION

It is another object of the invention to propose braking devices that can be released again particularly easily and reliably after activation (braking or catching).

### THE INVENTIVE SOLUTION

In order to accomplish this task, it is - as a first alternative - provided that the braking device has a brake lining with a main surface for abutting against the brake rail. Furthermore, the brake lining has an opposite main surface with which it is able to glide on a base plate in and opposite to the direction of travel of the car. Finally, the brake lining has two side surfaces extending parallel to the direction of travel. The brake lining is characterized in that the side surfaces each have at least one, better each at least two guide portions that are retained in a depression or an elongated hole or in several depressions or elongated holes in a manner displaceable in and opposite to the direction of travel. The crucial advantage of such a brake lining is that it puts up a greatly reduced resistance against the release of the brake.

If the brake is to be released from the braking state or from catching by the car being moved a bit in the opposite direction, then the brake lining does not block this movement. Instead, the brake lining, which still adheres to the brake rail, slides relative to the base plate and thus does not impede the movement releasing the brake.

In this case, the brake lining according to the invention is guided particularly reliably due to the fact that at least one guide portion, respectively, protrudes - preferably in direction orthogonally to the direction of travel - from every of its two side surfaces extending parallel to the direction of travel, which is retained in a displaceable manner in an elongated hole or a depression in and opposite to the direction of travel.

**As a second alternative a** braking device is proposed that has at least one brake lining with a brake lining main portion exhibiting a main surface for abutting against the brake rail and exhibiting an opposite main surface with which it slides on a base plate and one or preferred at least two brake lining guide portions extending parallel to the direction of travel, whereas the brake lining forms a saddle that is able to slide back and forth along the base plate, guided by it in direction of travel.

Independent protection is sought for these two alternatives of the invention as well as in connection with other aspects of the invention described by a independent claim or subclaims depending therefrom.

### FURTHER IMPROVEMENTS OF THIS INVENTION

In regard to the first alternative proposed in this chapter, the following has to be notified:
It is particularly beneficial if the depressions or elongated holes are formed only on one side by the basic body as such, and are formed on the other side by a component that can be separated from the basic part and is attached to the basic body in a non-destructively detachable manner.

Such a design considerably facilitates mounting and replacing the brake lining.

This applies in particular if the said component can be fixed in different positions relative to the basic body (for example by means of elongated holes) so that it is possible to tune the play between the brake lining (or the PTFE-plate carried by it) and the base plate or between the brake lining and the PTFE-plate carried by the base plate.

Preferred embodiments show the following additional features:
The braking device (1) according to claim 9, which is improved in that the depressions or elongated holes are formed on one side by the basic body as such.

The braking device (1) according to claim 9 or the aforementioned paragraph, which is improved in that the depressions or elongated holes are formed on one side by a separate component different from the actual basic body, which is attached to the basic body in a non-destructively detachable manner, preferably screwed to it.

The braking device (1) according to claim 9 or the aforementioned two paragraphs, characterized in that the two narrow side surfaces extending transversely to the direction of travel transition into appendages that limit the movement in and opposite to the direction of travel that the brake lining is able to carry out on the base plate associated with it.

Further advantages, mechanisms of action and optional embodiments of the invention become apparent from the following description of a preferred exemplary embodiment with reference to the Figures.

### LIST OF FIGURES

Figure 1 shows a sectional view through an exemplary embodiment according to the invention of a braking device.
Figure 2 shows an exploded view of the braking device according to Figure 1, however, without illustrating the brake rail 3.
Figure 3 shows a side view of the braking device according to Figure 1, at the same time visualizing the contact according to the invention, which detects the activation of the brake and the release and which is operated by means of a key positioned between the basic body and the contact.
Fig. 3a shows the alternative possibility that the contact is directly pressed down by means of the basic body.
Figure 4 shows an exploded view of the retaining device 22 according to the invention, as it can already be seen in Figure 3.
Figure 5 shows a longitudinal section through a retaining device according to the invention, as it can already be seen in Figure 3.
Figure 6 shows the braking device according to Figure 1, but in a fully activated state, i.e. during maximum braking action or while catching.
Figure 7 shows a brake roller as it is preferably used within the context of the braking device according to the invention.
Figure 8 again shows a longitudinal section through a retaining device according to the invention, as it is already shown in Figure 5, but in a state in which the braking device is fully activated and thus has caught completely.
Figure 9 shows a construction starting from the construction according to Figure 2 but with modifications in regard to the brake lining and the way how it is affixed to the base plate.
Figure 10 shows a cut through a brake equipped with the same brake lining like the brake of Figure 9.
Figure 11 shows a cut through the base plate 6 and the brake linining 4 as used by Figure 10.
Figure 12 shows a perspective lateral view onto the construction according to Figure 11.
Figure 13 shows Figure 12 in an exploded stage.
Figure 14 shows a brake like Figure 9 but equipped with an alternative retainer 22.
Figure 14a shows the retainer according to Figure 14 "cut through" along the longitudinal axis of the tappet 27.
Figure 15 shows a brake like Figure 9 but equipped with an retainer 22 using an alternative holding magnet 25.
Figure 16 shows a brake like Figure 9 equipped with a retainer 22 using a conventional holding magnet 25 embodied as a solenoid exerting the holding forces itself.

### PREFERRED EMBODIMENTS

### The preferred elevator brake as such

### a) First alternative

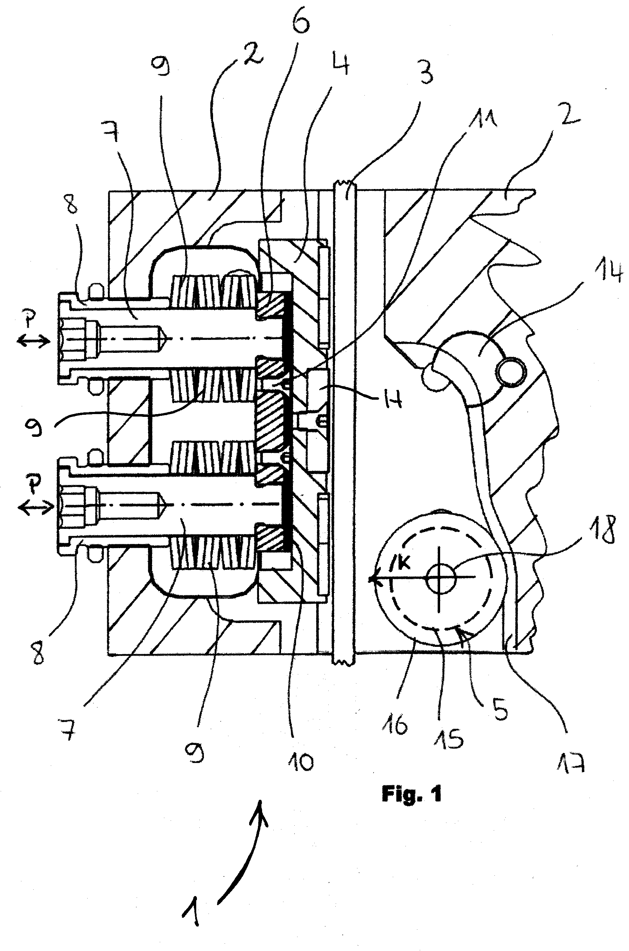

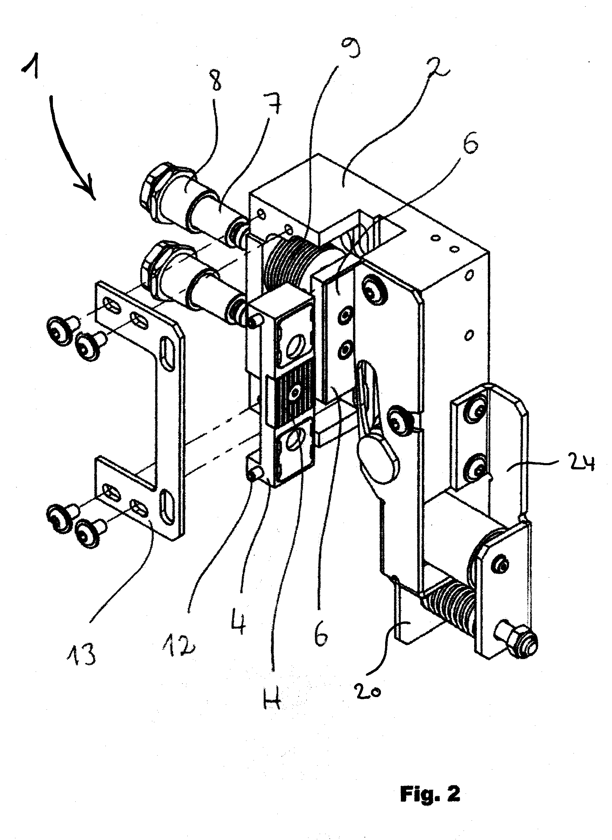

The fundamental structure of a particularly preferred exemplary embodiment of the braking device according to the invention becomes most readily apparent if Figures 1 and 2 are viewed side-by-side.

The basic body 2, which grasps around a brake rail 3 from three sides (see Fig.2), is easily recognizable, wherein the brake rail is not shown in Fig. 2. Generally, one guide rail per brake, which is provided anyway, is used as a brake rail.

On the one side of the brake rail, the basic body 2 holds the brake lining 4 in position. On the other side, the basic body 2 holds a braking means, which in this case is configured in the form of a brake roller 5, in its stand-by position.

As can best be seen in Figure 1, the brake lining preferably has a hard material insert H mostly in its center. The hard material insert carries a friction surface of material that has been subsequently melted onto it, i.e. welded or lasered onto it. This material is particularly wear-resistant.

Preferably, the brake lining 4 is placed on a base plate 6. The base plate 6 is retained on the base body 2 on at least two guiding bolts 7 in a manner displaceable in the direction of the arrows P. Ideally, the guiding bolts 7 in this case do not directly move in a bore of the basic body 2 but within a hollow bolt 8, see in particular see Fig. 1. This is not without reason, because a spring member, in this case preferably in the form of a cup spring assembly 9, is situated between each hollow bolt 8 and the base plate 6. The base plate 6, and with it also the brake lining 4, can be moved by corresponding forces against the elastic forces of the cup spring assemblies 9 in the direction of the arrows by the guiding bolts 7 being displaced correspondingly in the hollow bolts 8. By tightening or loosening the hollow bolts 8, the bias of the spring members configured in this case as cup spring assemblies 9 can be adjusted.

As can easily be seen in Fig. 1, the brake lining 4 is designed in each case in such a way that it has, on its side facing away from the brake rail, an offset which the base plate 6 engages. In this case, the term "offset" indicates that the brake lining 4 has a projection at least on its two narrow end faces which limits the movement in and opposite to the direction of travel of the elevator car that the brake lining 4 is able to carry out relative to the base plate, by said projection abutting a narrow end face of the base plate 6 in due time. In this case, a sliding member 10, often in the form of a PTFE plate, is preferably located between the base plate 6 and the brake lining 4. This sliding member 10 can be connected to the base plate 6 by means of corresponding connecting means, in this case in the form of retaining bolts 11. Generally taught, the sliding member is made of a material that has friction reducing properties.

In order to prevent the released brake lining 4 from inadmissibly lifting off from the base plate 6, each brake lining 4 is preferably laterally retained and guided. As Fig. 2 illustrates, this is realized by at least one, better two, guide portions 12, in this particular case in the form of small pins, protruding from the lateral edges of the brake lining 4 which extend parallel to the direction of travel. These guide portions 12 are guided in corresponding recesses, most frequently in the form of elongated holes. On the one side, the guiding action is provided preferably directly in the basic body 2, and on the other side, preferably in a retaining piece or retaining plate 13 configured so as to be detachable from the basic body 2. The latter can best be seen in Figure 2. This retaining piece or retaining plate 13 is most frequently screwed to the basic body 2.

The reason for the brake lining 4 being retained and guided in the manner described up to this point becomes apparent if one realizes, referring to Figure 1, how the braking device according to the invention is activated.

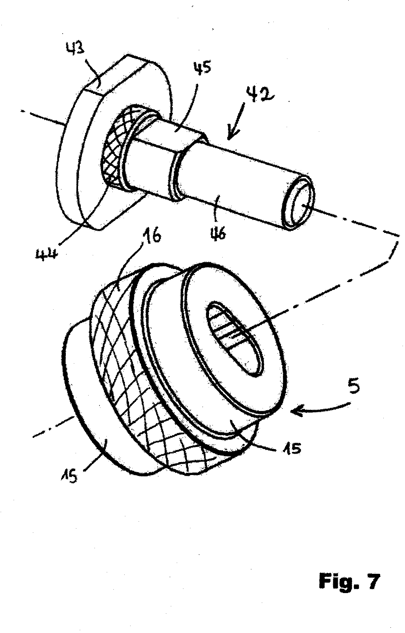

In order to activate the braking device, the brake roller 5 shown in detail by Fig. 7 is displaced in the direction of the arrow K until it abuts against the surface of the brake rail 3. Once it has come to rest there, it starts rolling on the brake rail and thus moves (for example, when the car travels downwards) upwards, into the area between the basic body 2 and the brake rail 3. In the process, the knurled circumferential surface of the brake roller 5, which is hereinafter referred to as knurled portion 16, comes into contact both with the basic body 2 and with the surface of the brake rail 3, i.e. at the bottom of the groove 17, see Figs. 1, 6 and 7.

This results in the brake roller 5 being driven into the narrowing area between the basic body 2 and the brake rail 3 with great force.

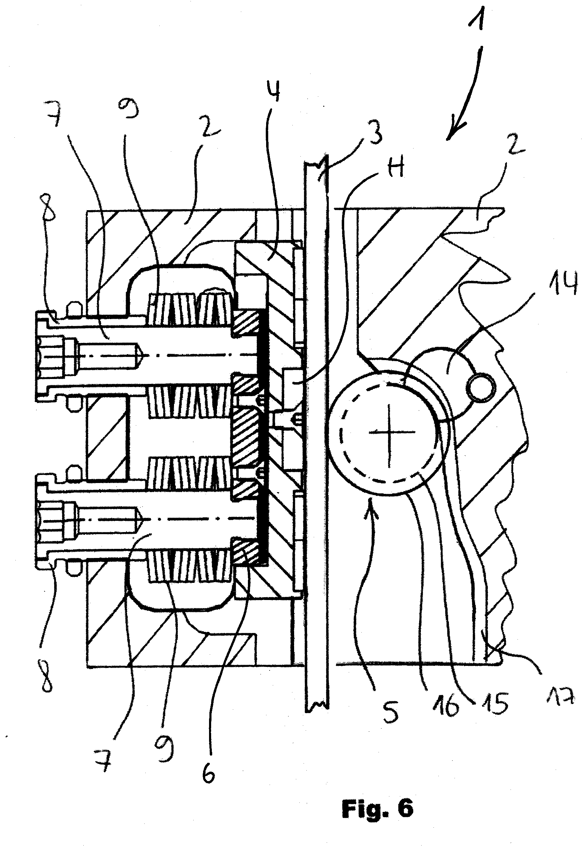

Thus, the brake roller 5 applies forces to the basic body 2 mounted in a floating manner on the car which cause the former to draw aside towards the right-hand side from its position shown in Figure 1, i.e. towards the side of the brake roller 5. In this way, the brake lining 4 abuts with its surface against the brake rail 3. The friction forces thus acting on the brake lining 4 carry the brake lining 4 along, so that it is relatively displaced relative to the base plate 6 in the opposite direction to the direction of travel by sliding on it. The deeper the brake roller 5 is driven into the narrowing area between the basic body 2 and the brake rail 3, the more the cup spring assemblies 9 are compressed and the higher the braking force becomes. Finally, the brake roller and the brake lining 4 reach their position shown in Figure 6. In this position, the brake roller has entered the area between the basic body and the brake rail 3 as deeply as possible. At the same time, the projection carried by the brake lining on its lower narrow end face abuts against the end face of the base plate 6, so that the brake plate is able to transmit braking forces via the base plate 6 onto the basic body 2, and via this, onto the car. Here, the brake exerts its maximum braking force.

The above-described relative movability of the brake lining 4 on the base plate 6 retaining it is very advantageous particularly for releasing the brake after braking or catching, which is described in more detail later on. As will be described below in more detail, the brake is released again by the car being moved a bit in the opposite direction to its previous direction of travel - in the case of Fig. 6, which shows the braking process when previously traveling downwards, upwards. Due to its relative movability on the base plate 6, the brake lining is able to "adhere" to the brake rail, while the elevator car is lifted a bit in order to release the brake roller from being "wedged in". Primarily, this goes easy on the brake lining which is saved from sliding on the surface of the brake rail while being subjected to great friction forces until the brake is released again.

In order to ensure that the brake roller 5 also does not cause or suffers any damage, an insert of a bearing metal 14 is preferably provided in the basic body 2 in this area, against which the brake roller 5 abuts with its shoulders 15, see Figs. 6 and 7. Here, the shoulders 15 of the brake roller are able to roll, under the influence of a great force, on the bearing metal insert 14 with sliding friction without any scoring damage being produced. In this position, the knurled portion 16 of the brake roller is no longer in contact with the basic body 2 or the bottom of its groove 17 because the groove 17 is configured to be so deep in the end portion that the knurled portion 16 of the brake roller 5 no longer reaches the bottom of the groove. This makes sense, because the friction forces arising on the knurled portion 16 of the brake roller are required only for applying forces to the brake roller for a short moment in such a way that it is driven into the area between the basic body 2 and the brake rail 3 to the maximum extent.

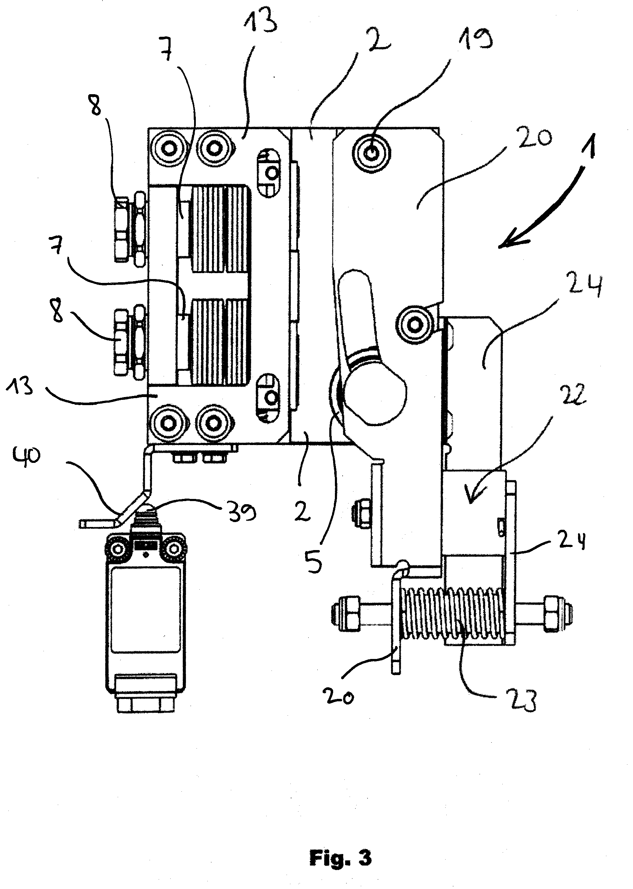

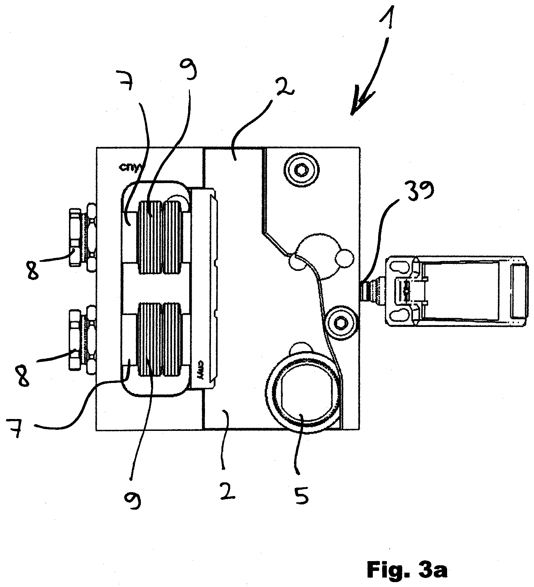

What is so special about the brake roller 5 is that it has one shaft stub 18 on each of both sides, see Fig. 7. The brake roller 5 is retained on the brake roller bracket 20 by means of this shaft stub, see Figures 2 and 3. For this purpose, the brake roller bracket 20 has an elongated hole 21 in which the shaft stubs 18 of the brake roller can move up and down, so that the driving of the brake roller 5 into the area between the basic body 2 of the brake rail 3 is not impeded by the brake roller bracket 20. Here, the brake roller bracket 20 is pivotably attached to the basic body 2 by means of a joint 19.

The brake roller bracket 20 retains the brake roller 5 in its stand-by position whenever it is not used. For this purpose, a retaining device 22 is provided, whose exact structure is to be explained in more detail below. Against the action of the brake roll feed spring 23, the retaining device 22 retains the brake roller bracket 20 in a position in which it, in turn, retains the brake roller 5 in a position distant from the brake rail 3. Here, the brake roll feed spring is drawn as a single spring; however, it may also be a spring member consisting of several individual springs.

As can be seen, the particularly preferred design described by Figure 3 is configured in such a way that a retaining part 24, which is generally configured as a retaining pate, retains the pin on which the brake roll feed spring runs. This pin extends through the retaining part 24. On its other side, this pin extends through the brake roller bracket 20. In this manner, the brake roll feed spring 23 is able to generate compression forces between the retaining part 24 and the brake roller bracket 20.

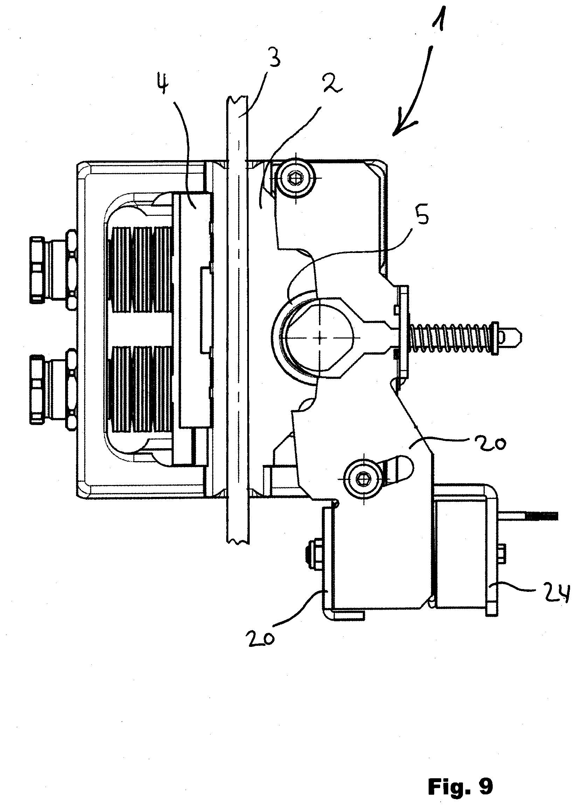

It must be noted that Figs. 1 and 6 show only a part of the braking device, i.e. the part provided for braking or catching in case of downward travel. Generally, however, the braking device is capable of functioning bidirectionally, i.e. brake the car also in case of upward travel. In such braking devices, the basic body continues in a mirrored form on the bottom edge of Fig. 1 or 6; there, it optionally also carries a second brake lining of the type shown in Figs. 1 and 6. In that case, two areas are then available between the basic body and the guide rail into which the brake roller can be driven - i.e. the previously explained area shown in Figs. 1 and 6, into which the guide roller is driven during downward travel, and a corresponding area situated underneath that, into which the guide roller is driven for braking during upward travel. Such a biderectionally effective construction is roughly illustrated by Fig. 9, for example.

Summarizing this last technical chapter, it is to be mentioned that in addition to claim 9 and the claims depending thereon protection will be sought, when the time has come, for the following:
The braking device (1) according to claim 9, being improved that way that the two narrow side surfaces extending transversely to the direction of travel transition into appendages that limit the movement in and opposite to the direction of travel that the brake lining is able to carry out on the base plate associated with it.

### b) Second alternative

As an alternative in regard to the aforementioned embodiment of the braking device, the invention proposes a second version.

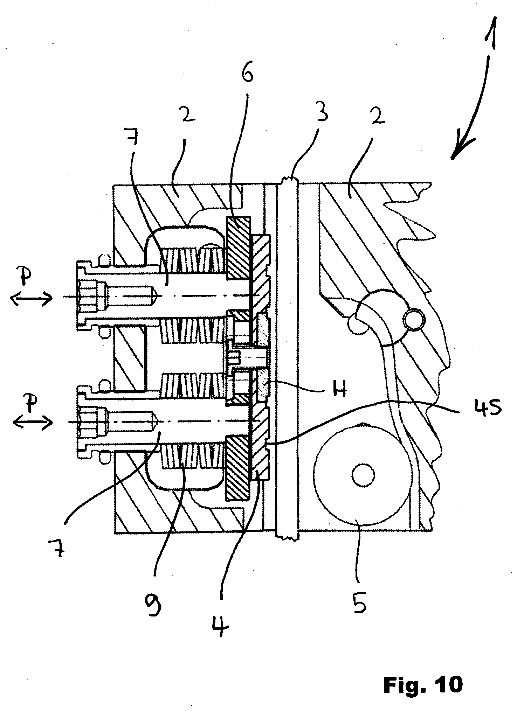

The best way to understand how this second version works is to consider Figs. 9 and 10 side by side.

Once again, the basic body 2, which grasps around a brake rail 3 from three sides, is easily recognizable, in particular because the brake rail is shown in Figs. 9 and 10, too. Generally, one guide rail per brake, which is provided anyway, is used as a brake rail.

On the one side of the brake rail the basic body 2 holds the brake lining 4 in position. On the other side the basic body 2 holds a braking means, which in this case is configured in the form of a brake roller 5, in its stand-by position.

As can best be seen in Figure 10, the brake lining preferably has a hard material insert H in its center, equidistant from the guiding bolts, seen in direction of travel. The hard material insert H carries in most cases a friction surface of material that has been subsequently melted onto it, i.e. welded or lasered onto it. This material is particularly wear-resistant.

Preferably, the brake lining 4 is placed on a base plate 6 - in Fig. 9 the base plate 6 is hidden by the lateral guiding portions of the brake lining while in Fig. 10 said lateral guiding portion is cut away so that the base plate 6 is visible.

The base plate 6 is retained on the base body 2 on at least two guiding bolts 7 in a manner displaceable in the direction of the arrows P, i. e. fully or at least essen-tialy in orthogonal direction compared to direction of travel.

Ideally, the guiding bolts 7 in this case do once again not directly move in a bore of the basic body 2 but within a hollow bolt 8, see in particular see Fig. 10. This is not without reason, because a spring member, in this case preferably in the form of a cup spring assembly 9, is situated between each hollow bolt 8 and the base plate 6. The base plate 6, and with it also the brake lining 4, can be moved by corresponding forces against the elastic forces of the cup spring assemblies 9 in the direction of the arrows P by the guiding bolts 7 being displaced correspondingly in the hollow bolts 8. By tightening or loosening the hollow bolts 8, the bias of the spring members configured in this case as cup spring assemblies 9 can be adjusted.

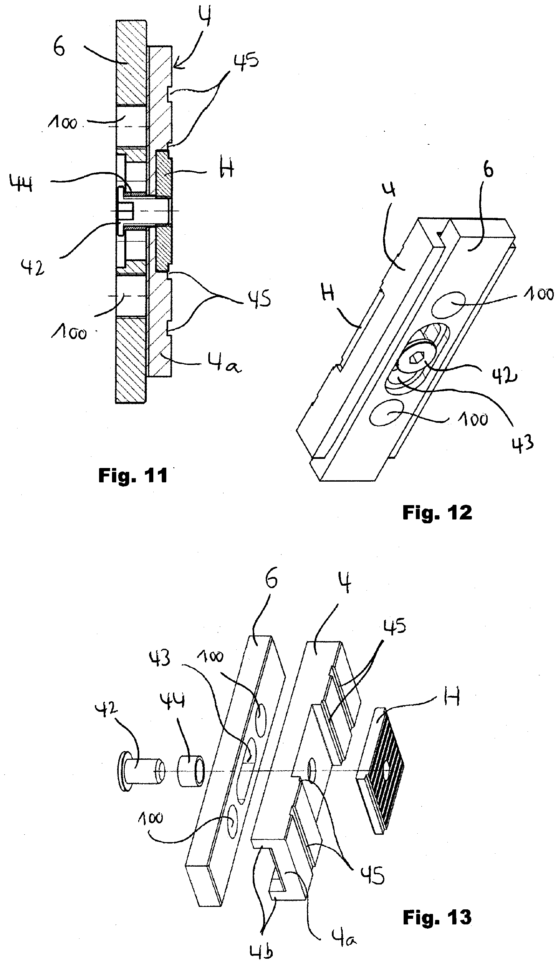

This embodiement makes use of a particular effective interconnection and guiding arrangement between the base plate 6 and the brake, as explained hereinafter on the basis of Figs. 11 to 13.

For this purpose, the brake lining 4 is - preferably integrally - formed of a brake lining main portion 4a and brake lining guide portions. That means that the brake lining main portion 4a passes laterally into brake lining guide portions 4b. The brake lining guide portions 4b preferably have the same or essentially the same length as the brake lining main portion 4a, so that the brake lining shows preferably a C-shaped cross section (including a [-shaped cross section) with a guiding groove between the brake lining guide portions. Regardless from the said preferred C-shaping one can say in broadest sense that the brake lining forms an arrangement that is able to slide back and forth along the base plate 6, guided by it in direction of travel and in opposite direction. Preferably the base plate 6 is - measured along direction of travel - longer than the brake lining 4, preferably at least 15 %.

That way additional guiding rods or guiding pins that extend along direction of travel and that guide the brake lining in this direction can be omitted. That way the manufacturing and replacement of the brake lining - which is a part subjected to wear - becomes much easier and economic.

Alternatively the brake lining guide portions 4a may be shorter, for example that way that per side only two local brake linig guide portions 4a -for example in the shape of merlons - are existent which are positioned distant from each other. Nevertheless, they still show - in regions where they are existent - a C-shaped or saddle-like cross section with a guiding groove between the brake lining guide portions.

As it can best seen in Figs. 12 and 13, the said guiding groove accommodates the base plate 6 when the brake linining 4 is connected in working position to the base plate 6. That way the brake lining can securely slide in and against travel direction of the elevator car along the base plate.

In order to prevent the released brake lining 4 from inadmissibly lifting off from the base plate 6, the hanging together between the brake lining 4 and the the base plate 6 is provided for by means of a holding screw 42. For the purpose of collaboration with the holding screw 42, the brake lining 4 or- pereferably its insert H - is equipped with a female thread. In case the insert H is equipped with a female thread, it constitutes a holding nut, whereas the brake lining comprises in this case a through hole for the holding screw 42.

The insert H is preferably secured in and against direction of travel by the form fit that is exerted by the recess in the brake lining accomodating the insert H.

The base plate 6 carries - preferably framed by threaded holes 100 for receiving the male thread of the guiding bolts 7 - an elongated hole 43. The elongated hole accommodates a part of the shaft of screw 42 (and, preferably, the head of the holding screw, too, in a flush manner) with play so that the holding screw can move in the elongated hole 43 in and against direction of elevator car's travel. The head of the holding screw 42 is positioned on the side which is directed away from the brake rail 3.

Most preferably, the elongated hole and the holding screw are designed that way that the holding screw - together with the elongated hole 43 - limits the maximum of the relative movement between the base plate 6 and the brake lining 4 in and against the direction of elevator car's travel.

Preferably, the shaft of the holding screw 42 carries a tubular collar 44 made from a friction reducing material, for example a bearing metal, in paricular like bearing bronze or the like.

It is a particular advantage if the brake lining 4 is provided in the "softer" areas before and/or after the insert H with a profiling, inparticular in the shape of one or more grooves 45 extending obliquely or orthogonally to the direction of travel. This profiling or groove(s) respectively are able to pick up and guide away wear and rub reducing that way the percentage of the wear and rub which might be fused or "glued" to the surface of the brake rail and/or insert H again by being surpassed again during a subsequent braking opration.

It is a particular advantage if the insert H is equipped with a profiling in the shape of grooves that extend fully or essentially partallel to the direction of travel making it that way easier for wear and rub to escape from the high pression and high friction area where the insert H contacts the brake rail 3.

This embodiment, too, preferably possesses a sliding member 10, often in the form of a PTFE plate or a bearing bronze or the like, that is preferably located between the base plate 6 and the brake lining 4. This sliding member 10 is preferably not connected to the base plate 6 by additional means. Instead, the silding member 10 is preferably hold captured by the holding screw 42 which is stuck trough an according through hole in the sliding member. Generally taught, the sliding member 10 is made of a material that has friction reducing properties.

Generally spoken, it is possible to provide two or more holding screws of the aformentined type, it is - however - clearly preferred to provide only one such holding screw 42 per brake lining.

The reason for the brake lining 4 being retained and guided in the manner described up to this point becomes apparent once again if one realizes, referring to Figure 1 (showing a different embodiment exerting the same braking function, like Figures 2, 3 and 6), how the braking device according to the invention is activated.

In order to activate the braking device, the brake roller 5 shown in detail by Fig. 7 (which is used by this embodiment, too) is displaced in the direction of the arrow K until it abuts against the surface of the brake rail 3. Once it has come to rest there, it starts rolling on the brake rail and thus moves (for example, when the elevator car travels downwards) upwards, into the area between the basic body 2 and the brake rail 3. In the process, the knurled circumferential surface of the brake roller 5, which is hereinafter referred to as knurled portion 16, comes into contact both with the basic body 2 and with the surface of the brake rail 3, i.e. at the bottom of the groove 17, see Figs. 1, 6 and 7.

This results in the brake roller 5 being driven into the narrowing area between the basic body 2 and the brake rail 3 with great force.

Thus, the brake roller 5 applies forces to the basic body 2 mounted in a floating manner on the car which cause the former to draw aside towards the right-hand side from its position shown in Figure 1, i.e. towards the side of the brake roller 5. In this way, the brake lining 4 abuts with its surface against the brake rail 3. The friction forces thus acting on the brake lining 4 carry the brake lining 4 along, so that it is relatively displaced relative to the base plate 6 in the opposite direction to the direction of travel by sliding on it. The deeper the brake roller 5 is driven into the narrowing area between the basic body 2 and the brake rail 3, the more the cup spring assemblies 9 are compressed and the higher the braking force becomes. Finally, the brake roller and the brake lining 4 reach their position shown in Figure 6. In this position, the brake roller has entered the area between the basic body and the brake rail 3 as deeply as possible. At the same time, the projection carried by the brake lining on its lower narrow end face abuts against the end face of the base plate 6, so that the brake plate is able to transmit braking forces via the base plate 6 onto the basic body 2, and via this, onto the car. Here, the brake exerts its maximum braking force.

The above-described relative movability of the brake lining 4 on the base plate 6 retaining it is very advantageous particularly for releasing the brake after braking or catching, which is described in more detail later on. As will be described below in more detail, the brake is released again by the car being moved a bit in the opposite direction to its previous direction of travel - in the case of Fig. 6, which shows the braking process when previously traveling downwards, upwards. Due to its relative movability on the base plate 6, the brake lining is able to "adhere" to the brake rail, while the car is lifted a bit in order to release the brake roller from being "wedged in". Primarily, this goes easy on the brake lining which is saved from sliding on the surface of the brake rail while being subjected to great friction forces until the brake is released again.

In order to ensure that the brake roller 5 also does not cause or suffers any damage, an insert of a bearing metal 14 is preferably provided in the basic body 2 in this area, against which the brake roller 5 abuts with its shoulders 15, see Figs. 6 and 7. Here, the shoulders 15 of the brake roller are able to roll, under the influence of a great force, on the bearing metal insert 14 with sliding friction without any scoring damage being produced. In this position, the knurled portion 16 of the brake roller is no longer in contact with the basic body 2 or the bottom of its groove 17 because the groove 17 is configured to be so deep in the end portion that the knurled portion 16 of the brake roller 5 no longer reaches the bottom of the groove. This makes sense, because the friction forces arising on the knurled portion 16 of the brake roller are required only for applying forces to the brake roller for a short moment in such a way that it is driven into the area between the basic body 2 and the brake rail 3 to the maximum extent.

What is so special about the brake roller 5 is that it has one shaft stub 18 on each of both sides, see Fig. 7. The brake roller 5 is retained on the brake roller bracket 20 by means of this shaft stub, see Figures 2 and 3. For this purpose, the brake roller bracket 20 has an elongated hole 21 in which the shaft stubs 18 of the brake roller can move up and down, so that the driving of the brake roller 5 into the area between the basic body 2 of the brake rail 3 is not impeded by the brake roller bracket 20. Here, the brake roller bracket 20 is pivotably attached to the basic body 2 by means of a joint 19.

The brake roller bracket 20 retains the brake roller 5 in its stand-by position whenever it is not used. For this purpose, a retaining device 22 is provided, whose exact structure is to be explained in more detail below. Against the action of the brake roll feed spring 23, the retaining device 22 retains the brake roller bracket 20 in a position in which it, in turn, retains the brake roller 5 in a position distant from the brake rail 3. Here, the brake roll feed spring is drawn as a single spring; however, it may also be a spring member consisting of several individual springs.

As can be seen, the particularly preferred design described by Figure 3 is configured in such a way that a retaining part 24, which is generally configured as a retaining pate, retains the pin on which the brake roll feed spring 23 runs. This pin extends through the retaining part 24. On its other side, this pin extends through the brake roller bracket 20. In this manner, the brake roll feed spring 23 is able to generate compression forces between the retaining part 24 and the brake roller bracket 20.

It must be noted that Figs. 1 and 6 show only a part of the braking device, i.e. the part provided for braking or catching in case of downward travel. Generally, however, the braking device is capable of functioning bidirectionally, i.e. brake the car also in case of upward travel. In such braking devices, the basic body continues in a mirrored form on the bottom edge of Fig. 1 or 6; there, it optionally also carries a second brake lining of the type shown in Figs. 1 and 6. In that case, two areas are then available between the basic body and the guide rail into which the brake roller can be driven - i.e. the previously explained area shown in Figs. 1 and 6, into which the guide roller is driven during downward travel, and a corresponding area situated underneath, into which the guide roller is driven for braking during upward travel.

Summarizing this chapter it is to be mentioned that in addition to claim 12 protection will be sought, when the time has come, for the following:
A braking device (1) a according to claim 12, being improved in that way that characterized in that for the purpose of collaboration with the holding screw 42 the brake lining 4 or- pereferably its insert H - is equipped with a female thread.

A braking device according to the preceding paragraph, being improved in that way that the base plate 6 carries - preferably framed by threaded holes 100 for receiving the male thread of the guiding bolts 7 - an elongated hole 43.

A braking device according to the two directly preceding paragraphs, being improved in that way that the elongated hole is stepped such way that it accommodates - beside a part of the shaft of screw 42 - the preferably "pressure side flat" head of the holding screw, preferably that way that the big surface of the 'screw head is flush with the surface of the base plate.

A braking device according to the three directly preceding paragraphs, being improved in that way that the brake lining 4 comprises at least one insert H which is preferably made from hardened metal and which is secured in and against direction of travel by the form fit that is exerted by the recess in the brake lining accomodating the insert H.

A braking device according to the four directly preceding paragraphs, being improved in that way that the shaft of a holding screw 42 carries a tubular collar 44 made from a friction reducing material, for example a bearing metal, in paricular like bearing bronze or the like.

A braking device according to the five directly preceding paragraphs, being improved in that the brake lining 4 is provided with softer brake rail contact areas (compared to the insert H) before and/or after the insert H, seen in direction of travel.

A braking device according to the six directly preceding paragraphs, being improved in that the brake lining is provided in the softer areas with a profiling preferably in the shape of grooves 45 extending orthogonally to direction of travel.

A braking device according to the seven directly preceding paragraphs, being improved in that the insert H carries groove extending parallel to direction of travel.

### The retaining device according to the invention for the braking means

According to the invention, the braking means in the following exemplary embodiment is configured as a brake roller. This corresponds to a particularly preferred embodiment.

Preferably, the retainer or retaining device 22 already addressed, viewed in the direction of travel of the elevator car, is positioned in the area between the brake roll feed spring 23 on the one hand and the brake roller 5 on the other hand, see Fig. 2. In this case the brake roll feed spring 23 is not integrated into the retaining device 22 allowing thereby a design of the retaining device that is very compact in direction orthogonally to the direction of the elevator's travel. The retaining device 22 itself is attached to the retaining part 24 on the one side. On the other side the retaining device 22 interacts with the brake roller bracket 20 in the manner to be described later, see Figures 1 and 3.

In this case, the retaining device 22 prevents the brake roller bracket 20 from being pivoted clockwise in the direction towards the brake rail 3 due to the action of the brake roller bracket 23.

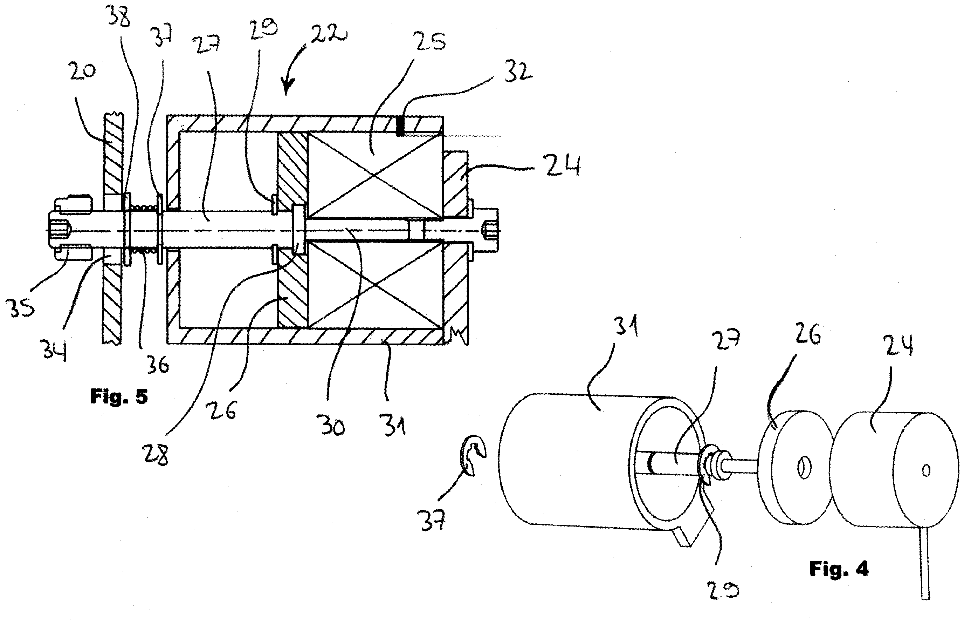

How the retaining device is structured - according to a first preferred embodiment - in detail, can best be seen in Figure 5.

The retaining magnet 25 is one component of the retaining device 22. With exceptions, the retaining magnet 25 is an electromagnet, i.e. a solenoid. If the electromagnet is de-energized, its retaining forces collapse; as long as it is supplied with power, it attracts the magnetic armature 26. Generally, the magnetic armature is a most frequently plate-shaped component with two generally planar main surfaces, which are much larger (preferably by at least the factor 5) than its side surface(s). Such a magnetic armature can be attracted and retained by a magnet particularly efficiently. Most frequently, the magnetic armature is always situated completely outside the retaining magnet even when attracted by it.

The magnetic armature 26 is mounted on a tappet 27. The tappet 27 generally is a metallic rod. This rod interacts at the free end with the brake roller bracket 20. The magnetic armature 26 is attached to the tappet 27. Preferably, the connection between the tappet 27 and the magnetic armature 26 is not an absolutely rigid connection but a connection offering a certain pivoting play. This makes it possible for the magnetic armature 26, which is generally configured as a plate, to be precisely oriented towards the end face of the retaining magnet 25 attracting it and thus abutting it in a planar manner, without an air gap due to a slightly slanted position becoming in any way evident.

In this way, the retaining magnet is able to raise the necessary retaining forces with respect to the magnetic armature 26 while consuming as little power as possible.

For this purpose, it is particularly preferred to provide the tappet 27 with a stop collar 28 that engages a corresponding step bore of the magnetic armature 26 and against which the magnetic armature abuts. On the side facing away from the coil, it is then ensured, by means of a snap ring 29 or a corresponding splint, that the stop collar 28 is unable to slip out of the step bore of the magnetic armature 26.

Ideally, the tappet 27 has a guiding appendage 30 that is mounted in a translationally displaceable manner in a central guide in the retaining magnet 25. In this manner, the tappet 27 is already guided well from the outset.

As can be easily seen in Figure 5, an armature housing 31 is provided which in this case is preferably configured in the form of a cup. Here, this armature housing 31 completely accommodates the retaining magnet 25 in the area of its circumference, i.e. reaches across the circumference of the retaining magnet. In this case, a cup is defined as a structure that has a bottom and a circumferential shell and an opening disposed opposite from the bottom. Preferably, the circumferential shell, for the main part or continuously, has a constant wall thickness. Here, the housing is configured as a thin-walled, preferably cylindrical cup, preferably made from sheet metal. Its wall thickness is preferably at least 1 mm, ideally at least 2 mm. It is particularly useful if the wall thickness of the cup is the same almost everywhere, also in the area of the bottom.

Here, the armature housing is press-fitted onto the circumference of the retaining magnet 25, i.e. it has a slightly smaller clear inner diameter compared to the outer diameter of the retaining magnet. In order to ensure that the armature housing does not become detached over time from the retaining magnet 25 due to vibrations or the like, a positive securing means is additionally also provided; in Figure 5, preferably in the form of a positive retaining pin 32.

It is particularly beneficial if a guide for the magnetic armature 26 is provided on the inner circumferential surface of the armature housing 31. In the present case, the inner circumferential surface of the armature housing 31 offers a guiding surface for the outer circumferential surface of the magnetic armature 26. In this manner, the tappet 27 is mounted particularly firmly and precisely.

In this case, the armature housing 31 is configured in such a way that the magnetic armature 26 moves exclusively within the armature housing 31, between its two extreme positions, of which the one corresponds to the completely inactive braking device with a fully released brake roller 5, and the other extreme position corresponds to the position in which the brake roller 5 is pulled to the maximum extent into the area between the basic body 2 and the brake disk 3. It is thus ensured that the retaining magnet cannot capture any metal particles that form an air gap between it and the magnetic armature 26, even if the latter is fully attracted. Thus, power consumption is minimized, with a permanent retaining function at the same time.

As was already discussed, the tappet 27 protrudes with its free end through a through-hole 33 in the end face of the armature housing 31 facing away from the retaining magnet 25.

However, the tappet 27 is preferably not rigidly connected to the brake roller bracket 20. And for good reason. The brake roller bracket 20 preferably has an elongated hole 34. The tappet 27 reaches through the elongated hole 34. On the side facing away from the retaining magnet 25 which protrudes over the elongated hole 34, the tappet is provided with a nut, preferably in the form of a self-locking nut 35 or a caulked or splinted nut. This nut prevents the tappet 27 from being pulled out of the elongated hole 34.

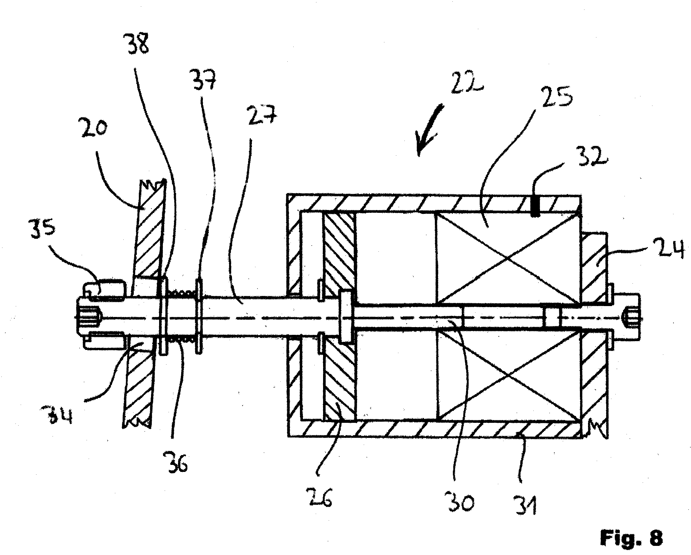

On the other side facing towards the retaining magnet 25, the tappet 27 acts on the brake roller bracket 20 via the spring member 36, see Fig. 8. In this case, the spring member 36 is preferably configured as a helical compression spring. The tappet has a snap ring 37 which is preferably clipped into the groove on the tappet and which serves as a counter-bearing for the spring member 36. On its other side, the compression spring member acts on a disk 38 which is movable along the tappet 27 and threaded on the tappet 27. Via this disk 38, the compression spring member 36 is able to interact with the brake roller bracket 20.

This special type of connection between the tappet 27 and the brake roller bracket 20 is provided for a good reason. Using the self-locking nut 35, the tappet 27 keeps the brake roller bracket 20 in a released function against the force of the brake roll feed spring 23 as long as the retaining magnet 25 is supplied with power and attracts the magnetic armature 26. Once the retaining forces of the retaining magnet 25 collapse or are overcome, the brake roll feed spring 23 presses the brake roller bracket 20 into a position in which it, in turn, presses the brake roller 5 against the surface of the brake rail 3 and activates the brake.

The release of the braking device after activation is carried out by the car being moved a bit in the opposite direction (compared with the direction in which it has moved prior to travel or braking). Thus, the brake roller 5 is forced to roll out of the area between the basic body 2 and the brake rail 3. The movement thus imposed on the brake roller is transmitted by the brake roller itself to the brake roller bracket 20, which is connected to it via the shaft stub 18. This is intended, because in this way the magnetic armature 26 is forced by the brake roller bracket to abut against the end face of the retaining magnet, so that the retaining magnet is able again to securely retain the magnetic armature 26 even if it is made comparatively weak - unlike designs in which the retaining magnet has to "capture" the magnetic armature over a greater or smaller air gap in order to reliably return the brake roller into its stand-by position by means of the brake roller bracket during the release of the brake and retain it there. A considerably stronger retaining magnet would be required for this.

At this instance, it must now be expected that the brake roller bracket 20 is pivoted back with such force that the magnetic armature 26 is pressed against the retaining magnet 25 too strongly if the brake roller bracket 20 were rigidly connected to the tappet 27.

However, a rigid connection is preferably not provided. If such a case of the brake roller bracket 20 being pressed back strongly occurs, then this is compensated by the spring member 36, see Figure 8 again. Because the spring member 36 allows for the brake roller bracket to move a bit in the direction towards the retaining magnet 25 even if the tappet 27 with the magnetic armature 26 already abuts fully against the retaining magnet 25. Damage is avoided in this manner.

It is particularly beneficial if the central opening of the retaining magnet 25, which also provides for the guidance of the guiding appendage 30 of the tappet 27, is also used for fixing the retaining magnet 25 on the retaining part 24. Preferably, this is done by means of a bolt screwed into the corresponding central bore of the retaining magnet 25.

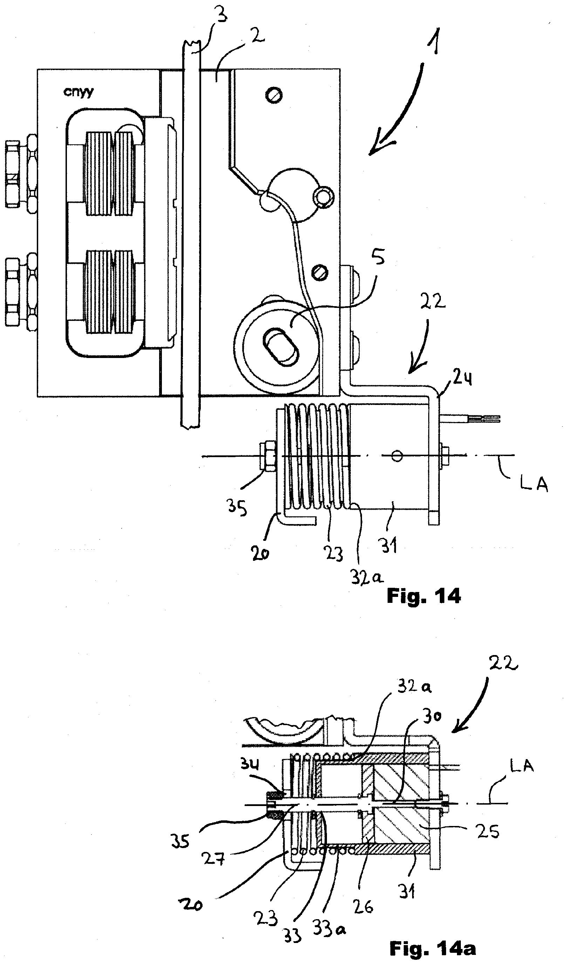

Figures 14 and 14a show a second, very preferred embodiment of the retainer or retaining device 22 to be used for the inventive braking devices.

The armature housing 31, the tappet 27 and the contents of the armature housing in the shape of the retaining magnet 25 and the magnetic armature 26 are identical to the according parts shown and explained on the basis of Figure 5 so that the foregoing disclosed facts apply accordingly.

The difference is that in this case the brake roll feed spring 23 is positioned in line with the armature housing 31 in direction along the longitudinal axis LA of the tappet 27.

Preferably, the armature housing 31 forms a stopper 32a against which one end of the brake roll feed spring 23 rests. In this particular case the stopper 32a is embodied as an annular shoulder formed on the the outside of the stepped jacket being part of the housing 31, see Figure 14a.

It is preferred that the jacket, preferably by being stepped, forms not only a stopper 32a but, too, a guiding portion 33a on which one ore preferably more windings of the brake roll feed spring 23 are guided in a sliding manner, see Figure 14a again.

The other end of the brake roll feed spring 23 rests against the brake roller bracket 20.

The brake roll feed spring 23 is hold compressed, i. e, pretensioned as long as the retaining magnet 25 tightly attracts the magnetic armature 26.

As soon as the retaining magnet 25 releases the magnetic armature 26, the brake roll feed spring makes the brake roller bracket 20 turn in clockwise direction so that the brake roller 5 is brought into contact with the brake rail 3, see Fig. 14. Summarizing this last technical chapter, it is to be mentioned that in addition to the first three claims protection will be sought, when the time has come, for the following:
The braking device (1) according to claim 3, being improved that way that the armature housing (31) is press-fitted onto the retaining magnet (25), and in particular onto its circumferential shell surface.

The braking device (1) according to the preceding paragraph, being improved that way that the armature housing (31) is additionally anchored to the retaining magnet (25) by a positive fit.

The braking device (according to claims 1 to 3 and/or the two directly preceding paragraphs, being improved that way that the armature housing (31) encloses exclusively the magnetic armature (26), a part of the tappet (27) connected to the magnetic armature (26) and the retaining magnet (25).

The braking device (1) according to claims 1 to 3 and/or the three directly preceding paragraphs, being improved that way that the armature housing (31) has a passageway on the side thereof facing away from the retaining magnet (25), through which the tappet (27) protrudes towards the outside out of the armature housing (31).

The braking device (1) according to claims 1 to 3 and/or the four directly preceding paragraphs, being improved that way that the retaining magnet (25) forms a preferably central guide in which a guiding appendage of the tappet (27) is held in a movable manner.

The braking device (1) according to claims 1 to 3 and/or the five directly preceding paragraphs, being improved that way that the magnetic armature (26) is movably retained on the tappet (27) in such a way that the side thereof facing towards the retaining magnet is able to orient itself towards the retaining magnet.

The braking device (1) according to claims 1 to 3 and/or the six directly preceding paragraphs, being improved that way that the armature housing (31) forms on its inner face a sliding guide which interacts with the outer circumferential surface of the magnetic armature (26).

The braking device (1) according to claims 1 to 3 and/or the seven directly preceding paragraphs, being improved that way that the magnetic armature (26) has at least one air bypass, preferably several air bypasses evenly distributed in the circumferential direction on the magnetic armature plate.

The braking device (1) according to claims 1 to 3 and/or the eight directly preceding paragraphs, being improved that way that the tappet (27) on a brake roller bracket (20) whose pivoting towards the guide rail causes the braking device (1) to be activated, characterized in that the tappet (27) is not rigid but can be brought into abutment against the brake roller bracket (20) via a spring member.

The braking device (1) according to the directly foregoing paragraph, being improved that way that the tappet (27) reaches through an elongated hole (34) of the brake roller bracket (20) and acts on the brake roller bracket (20) by means of a spring member on the one side of the elongated hole (34) and carries on the opposite side of the elongated hole (34) a stop, preferably in the form of a nut, which prevents the possibility of the tappet being pulled out of the elongated hole.

The braking device (1) according to claims 1 to 3 and/or the ten directly preceding paragraphs, being improved that way that the retaining magnet (25) is screwed to the basic body (2), preferably indirectly via a retaining part (24).

The braking device (1) according to claims 1 to 3 and/or the eleven directly preceding paragraphs, being improved that way that the retaining magnet (25) has a central bore by means of which it is screwed to the basic body (2).

The braking device (1) according to the directly foregoing paragraph, being improved that way that a part of the central bore forms the guide for the tappet (27) and another part of the central bore serves for screwing the retaining magnet (25) to the basic body (2) or the intermediate retaining part (24).

### The improvement of the holding magnet for the elevator brake

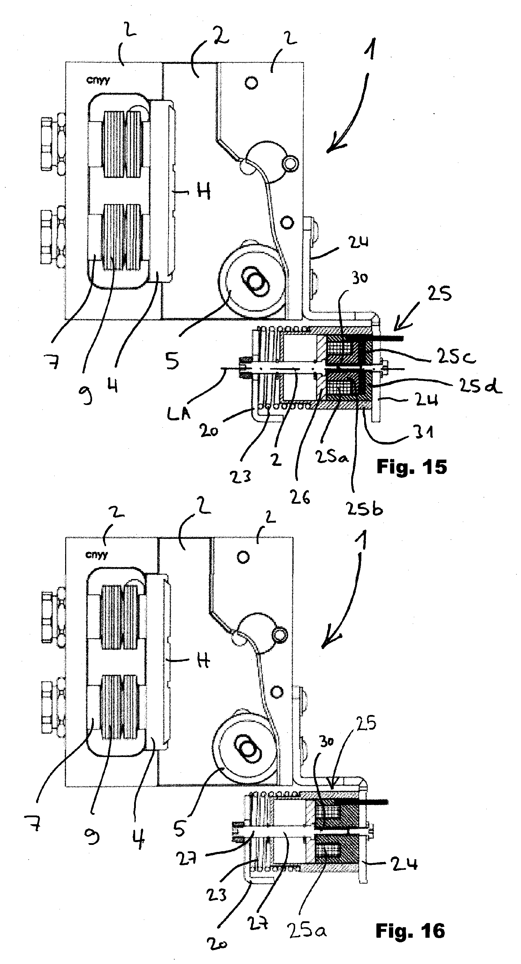

Conventionally, the elevator brake is hold in inactivated standby position by means of a holding magnet in the shape of a solenoid, as shown by Fig. 16. As long as the windings 25a of the solenoid are provided with electric current, the magnetic armature 26 will be attracted by the holding magnet. As soon as the current is switched of or broken down, the magnetic armature will be driven away from the holding magnet by means of the tension of the spring element so that the brake is activated.

According to one aspect of the invention, it is proposed to improve the holding magnet. For that purpose the holding magnet 25 is designed as a combination of a permanent magnet 25c and a solenoid which is itself preferably composed of a magnetically conductive core 25b and a winding 25a constituting a ring-shaped excitation coil through which the core 25b is stuck through or which carries itself the excitation coil. A permanent magnet in the sense of the invention is a magnet preferably made out of a hard magnetic material which does not need a permanent feed ing in of electric energy in order to produce the required magnetic holding forces.

Such a construction may be improved according to the general teaching of one or more of the following paragraphs.

Preferably, the core 25b broadens at one side in radial direction so that it covers the rear front face of the excitation coil. The rear front face is that front face that is opposite to the magnetic armature.

Ideally, the core has a center hole for receiving the guiding portion of the tappet 27 and, maybe, a fixing screw (see what is disclosed above in particular in connection with Fig. 5).

It has turned out as an optimum if the permanent magnet is positioned in line along the axis LA with the solenoid or, respectively, its housing. In this case the permantent magnet 25c is preferabliy positioned that way that it contacts the rear, radially extending front face of the core 25b without or substantially without an air gap. That way the core contributes to conduct the magnetic flux of the permanent magnet through the excitation coil to the magnetic armature 26. When the solenoid is energized, it forms an amplifier for the counter-flux generated by the solenoid.

Most preferably, a (for example cup-shaped) housing 25d is provided which accommodates in its inner area the permanent magnet 25c, the winding 25a of the excitation coil and the core 25b. This housing may form a field concentrator, too, for the permanent magnet and for the solenoid, as well, when energized.

Ideally, the core 25b forms along with the front face of the housing 25d a plane against which the magnetic armature 26 can rest without an air gap when being attracted.

In most cases the permanent magnet is embodied as a massive disc with a diameter being fully or essentially equal to the diameter of the excitation coil.

The said arrangement of the winding 25a, the core 25b, the permanent magnet 25c and the housing 25d, forms in total a holding magnet 25 which is preferably accommodated, together with the magnetic armature 26, in an armature housing 31 as disclosed above, in particular in connection with Fig. 8.

In optimum case the brake roll feed spring 23 is, in addition, arranged like disclosed above by means of Figures 14 and 14a and the specification text belonging thereto.

### The mechanism according to the invention for detecting the activation of the brake.

As described above, the activation of the braking device results in the basic body, which is mounted in a floating manner on the car, moving transversely to the direction of travel - because the braking means, which in this case is configured in the form of the brake roller, displaces the basic body towards the right-hand side due to the processes illustrated with reference to Figs. 1 and 6, while the braking means squeezes itself into the area between the basic body 2 and the brake rail 3 upon activation. The displacement of the basic body 2 transversely or completely or substantially (in particular tolerances) perpendicularly to the direction of travel of the car is ended only when the brake shoe 4 is pressed against the brake rail so firmly that its reaction force balances the force applied by the brake roller 5.

As soon as the braking means or the brake roller is returned into its stand-by position, the spring members 9 return the basic body mounted in a floating manner on the car into its initial position which it assumed prior to the start of braking or catching. Therefore, the basic body moves "back" transversely to the direction of travel of the car.

It is particularly advantageous to exploit this effect for detecting the activation and, preferably after a restart, the completely "released state" of the braking device. For this purpose, a contact 39 is provided, which interacts with the basic body and is generally stationary relative to the car, preferably on the side of the basic body which, relative to the brake rail, faces away from the brake roller bracket 20. As long as the basic body is still, or preferably also back again, in its stand-by position, it does not operate this contact 39, so that the contact 39 signalizes "brake inactive", preferably electrically - by a corresponding circuit or a mesh forming a part thereof being open or closed, so that the required signal is generated in an electrically analog or electrically digital manner.

As soon as the basic body 2 has moved transversely to the direction of travel - preferably at least to such an extent that a contact of the brake lining 4 with the brake rail 3 is produced - it operates the contact 39. Now, the circuit or its mesh is closed or interrupted by the switch if it was closed in the rest state.

Said contact 39 may be actuated directly by the basic body itself that presses onto the contact 39, like illustrated by Fig. 3a. Preferably, the contact 39 is contacted (when being contacted directly) by the lateral face of the basic body assigned to that side of the basic body that is carrying the means responsible for initial brake actuation, for example in the shape of the roller 5.

However, it is particularly beneficial if the contact 39 is not directly operated by the basic body, but via a key 40 attached on the basic body, see Fig. 3. It is preferably configured as a bail screwed to the basic body 2 which can be attached to the basic body in different positions, for example because the screws retaining it reach through at least one elongated hole. In this way, it can be ensured by means of an adjustment on-site that the basic body operates the contact in the correct manner. Preferably, the key is made of metal. It is beneficial if it is attached to the underside (the side facing towards the downward direction of travel of the car).

It is particularly beneficial if the basic body operates the contact via a ramp 41 that is inclined at an acute angle RA between 30° and 60° relative to the direction of travel of the elevator cage or car, as can be seen in Fig. 3. Ideally, this ramp is not configured on the basic body itself, but on said key. For this purpose, the key has a leg whose contact surface extends at said acute angle.

Summarizing this last technical chapter, it is to be mentioned that in addition to claim 5 and the claims depending thereon protection will be sought, when the time has come, for the following:
The braking device (1) according to claim 6 or 7, being improved that way that the key (40) is a bent metal sheet part.

The braking device (1) according to claim 5 and one or more claims depending from claim 5, being improved that way that the contact (39) is designed and positioned in such a way that it has a contact pin that is to be operated in the direction parallel or substantially parallel to the direction of travel.

The braking device (1) according to claim 5 and one or more claims depending from claim 5, being improved that way that the contact (39) is mounted in a stationary manner relative to the car.

The braking device (1) according to claim 5 and one or more claims depending from claim 5, being improved that way that the contact (39) can be fixed on a car in different positions by means of elongated holes.

The braking device (1) according to claim 5 and one or more claims depending from claim 5, being improved that way that the contact (39) is a component completely separate from the rest of the braking device and is sealed with respect to it against the ingress of dust.

### List of Reference Numerals 1 Braking device

- 1: Braking device
- 2: Basic body
- 3: Brake rail
- 4: Brake lining
- 4a: Main portion of the brake lining
- 4b: Brake lining guide portion

- 5: Brake roller
- 6: Base plate
- 7: Guiding bolt
- 8: Hollow bolt
- 9: Cup spring assembly
- 10: Sliding member
- 11: Retaining bolt
- 12: Guide portion
- 13: Retaining plate
- 14: Bearing metal insert
- 15: Shoulders of the brake roller
- 16: Knurled portion of the brake roller
- 17: Groove in basic body
- 18: Shaft stub of brake roller
- 19: Joint
- 20: Brake roller bracket
- 21: Elongated hole in brake roller bracket
- 22: Retainer
- 23: Brake roll feed spring
- 24: Retaining part
- 25: Retaining or "holding" magnet
- 25a: Windings
- 25b: Magnetically conductive core
- 25c: Permanent magnet

- 25d: Housing
- 26: Magnetic armature
- 27: Tappet
- 28: Stop pin
- 29: Snap ring
- 30: Guiding appendage of tappet
- 31: Armature housing
- 32: Retaining pin or positive-fit member
- 32a: Stopper
- 33: Through-hole
- 33b: Guiding portion of the armature housing
- 34: Elongated hole
- 35: Self-locking nut
- 36: Spring member
- 37: Snap ring
- 38: Disk
- 39: Contact
- 40: Key
- 41: Ramp
- 42: Holding screw
- 43: Elongate hole in the base plate 6
- 44: Tubular collar for the holding screw 42
- 100: Threaded hole for screwing a guide bolt in

- P: Arrow
- K: Arrow
- RA: Acute angle of ramp
- H: Insert oft he brake lining 4

## Claims

1. A braking device (1) for braking and/or catching an elevator car, with a basic body (2), a braking means (5) which, by abutting against a brake rail (3), is driven into a gap between the basic body (2) and the brake rail (3) and thus produces the braking forces, a spring member (23) pressing the braking means (5) in the direction of the brake rail (3) and a retaining magnet (25) which keeps the braking means (5), in its stand-by position, at a distance from the brake rail against the tension of the spring member (23) and acts on a magnetic armature (26), wherein the magnetic armature (26) is part of a tappet (27) that can be translationally moved back and forth between two extreme positions, of which the one extreme position marks the fully released position of the braking means (5) and the other extreme position marks the fully driven-in position of the braking means (5), **characterized in that** the path of the magnetic armature (26) between the two extreme positions, including the extreme positions, lies within an armature housing (31) which is adjacent to the retaining magnet (25) at least on the side on which the retaining magnet (25) attracts the tappet (27).

2. The braking device (1) according to claim 1, **characterized in that** the armature housing (31) constitutes a cup open on one side, which preferably consists of plastic or a magnetically isolating material and whose open side is closed off by the retaining magnet (25).

3. The braking device (1) according to claim 1 or 2, **characterized in that** the armature housing (31) accommodates the retaining magnet (25) at least partially, preferably completely.

4. The braking device (1) according to the preceding claims, **characterized in that** a brake roll feed spring (23) is postioned in line with the armature housing (31) in direction along the longitudinal axis of the tappet (27) whereas the armature housing (31) forms a stopper (32) against which one end of the brake roll feed spring (23) rests wheras the stopper (32) is preferably embodied as an annular shoulder formed on the the outside of the jacket being part of the armature housing (31).

5. A braking device (1) for braking and/or catching an elevator car, preferably but not exclusively according to any one of the preceding claims, with a basic body (2), a braking means (5) which, by abutting against the brake rail (3), is driven into an area between the basic body (2) and the brake rail (3) and thus produces the braking forces, wherein the basic body (2) is retained on the car in a floating manner in such a way that it carries out a transverse movement relative to the direction of travel of the car due to the braking member (5) being driven in, **characterized in that** a contact (39) which signalizes the activation of the braking device (1) is operated by the transverse movement.

6. The braking device (1) according to claim 5, **characterized in that** the contact (39) is operated via a key (40) that can be removed from the basic body.

7. The braking device (1) according to claim 6, **characterized in that** the key (40) can be fixed on a car in different positions, preferably by means of one or several elongated holes that it has.

8. The braking device (1) according to any one of the preceding claims 5 to 7, **characterized in that** the key (40) acts on the contact via a ramp (41) which includes an acute angle (RA) between 30° and 60°, better between 40° and 50°, with the direction of travel of the car.

9. A braking device (1), preferably but not exclusively according to any one of the preceding claims, **characterized in that** the braking device (1) has at least one brake lining (4) having a main surface for abutting against the brake rail (3) and an opposite main surface with which it slides on a base plate (6), as well as two side surfaces extending parallel to the direction of travel, **characterized in that** the side surfaces each have at least one, better each at least two guide portions that are retained in depressions or elongated holes movably in and opposite to the direction of travel.

10. The braking device (1) according to claim 9, **characterized in that** the depressions or elongated holes are formed on one side by the basic body as such.

11. The braking device (1) according to claim 9 or 10, **characterized in that** the depressions or elongated holes are formed on one side by a separate component different from the actual basic body, which is attached to the basic body in a non-destructively detachable manner, preferably screwed to it.

12. A braking device (1), preferably but not exclusively according to any one of claims 1 to 11, **characterized in that** the braking device (1) has at least one brake lining (4) with a brake lining main portion (4a) exhibiting a main surface for abutting against the brake rail (3) and exhibiting an opposite main surface with which it slides on a base plate (6) and one or preferred at least two brake lining guide portuions (4b) extending parallel to the direction of travel, **characterized in that** the brake lining forms a saddle that is able to slide back and forth along the base plate, guided by it in direction of travel.

13. A braking device according to claim 12, characterized that the brake lining is hold in sliding manner by means of at least one preferably only one holding screw (42) or holding rivet which is stuck through the base plate (6) and fastened in the brake lining (4) or an insert of the brake lining, while the screw or rivet is movably hold by an elongate hole (43) in the base plate, while the elongate hole forms a stopper for the holding screw or rivet that way that it defines the maximum of relative movement between the base plate (6) and the brake lining (4) in direction of travel.

14. The braking device (1) according to any one of the claims 9 to 13, **characterized in that** the brake lining (4) slides on the base plate (6) via a sliding member (10), preferably in the form of a friction-reducing solid intermediate layer, ideally in the form of a PTFE plate, a plastic plate or a plate of bearing metal.

15. The elevator braking device (1), preferably but not exclusively according to one of the preceding claims with a holding magnet (25) holding a brake roller or, more general, a brake friction producing organ in a standby position in which it does not contact the brake rail (3) against the closing force of a brake actuating spring element (23) **characterized in that** the holding magnet (25) is a combination of a permanent magnet (25c) which produces the force for said holding by attracting a magnetic armature (26) and of a solenoid with an excitation coil 25a which produces, when being energized, an opposite directed magnetic field that weakens the magnetic field of the permanent magnet (25c) in a way that the closing force of the spring element (23) overcomes the holding force of the permanent magnet (25c).

16. An elevator with an elevator car movable on guide rails, preferably with suspension cables guided over a drive sheave, **characterized in that** the elevator has at least one braking device (1) according to any one of the preceding claims.
